# EUROPEAN PATENT SPECIFICATION

(11) **EP 2 138 501 B1**
(45) Date of publication and mention of the grant of the patent: **13.08.2014**
(21) Application number: 09163451.9
(22) Date of filing: 23.06.2009
(51) Int. Cl.: C07F 7/12, C07F 7/18, C09D 4/00, G02C 7/04

(54) **Functional silane compound, coating solution, and method for manufacturing plastic lens**
Funktionelle Silanverbindung, Beschichtungslösung und Verfahren zur Herstellung einer Kunststofflinse
Composé de silane fonctionnel, solution de revêtement, et procédé de fabrication de lentille en plastique

(30) Priority: 24.06.2008 JP 2008164782
(43) Date of publication of application: 30.12.2009
(73) Proprietor: Hoya Corporation, Tokyo 161-8525 (JP)
(72) Inventor: Ito, Minoru, Tokyo 161-8525 (JP); Kojima, Hiroshi, Tokyo 161-8525 (JP); Sakurazawa, Tsuyoshi, Tokyo 161-8525 (JP)
(74) Representative: Betten & Resch

(56) References cited:
- EP-A- 0 507 727
- EP-A1- 0 169 992
- EP-A1- 1 479 439
- WO-A-96/39468
- WO-A-2007/126410
- WO-A1-92/08723
- WO-A1-97/26870
- US-A- 3 208 971
- US-A- 5 316 855
- US-A1- 2005 215 701
- US-B1- 6 939 908
- DATABASE CA [Online] CHEMICAL ABSTRACTS SERVICE, COLUMBUS, OHIO, US; 2004, MEL'NIK, I. V. ET AL: "Synthesis of alkoxysilanes as starting substances for preparation of new materials by the sol-gel procedure. Silanes with urea functional group" XP002546872 retrieved from STN Database accession no. 143:267014
- BENITEZ, MIRIAM ET AL: "Urea-Containing Mesoporous Silica for the Adsorption of Fe(III) Cations" CHEMISTRY OF MATERIALS , 18(23), 5597-5603 CODEN: CMATEX; ISSN: 0897-4756, 2006, XP002546871
- DATABASE CA [Online] CHEMICAL ABSTRACTS SERVICE, COLUMBUS, OHIO, US; 2006, MEL'NIK, I. V. ET AL: "Polysiloxane xerogels containing arch-fixed urea groups" XP002561908 retrieved from STN Database accession no. 146:402802

## Description

### BACKGROUND OF THE INVENTION

### 1. Field of the Invention

The present application discloses a functional silane compound and a coating solution using the functional silane compound. The present invention relates to a method for manufacturing a plastic lens using such a coating solution.

### 2. Description of the Related Art

Plastic lenses are provided with various kinds of surface coatings. The coatings include, for example, hard coating for improving abrasion resistance.

The coating layer of a plastic lens includes a silane-coupling agent and an inorganic fine particle sol.
The silane-coupling agent mediates chemical binding at a boundary surface between inorganic fine particles and a coated substance.
In addition, the silane-coupling agent allows an improvement in dispersibility of inorganic fine particles.

By the way, the plastic lenses are worn on the faces of persons and can be visually recognized by other persons' eyes.
For this reason, any damage on the plastic lens is not preferable.

Considering the frequency of attachment and detachment of spectacle lenses and the conditions under which a person uses spectacle lenses (for example, humidity, temperature, and light environment) plastic lenses may be placed under comparatively severe conditions.
Therefore, the coating of a plastic lens has been demanded to have high abrasion resistance and excellent adhesiveness.
Furthermore, considering the optical performance of the plastic lens, the coating has been demanded to be extremely thin to the extent that it can exert the optical performance thereof.

Specifically, it may be a hard-coat composition containing a hydrolyzed product of alkoxy silanes and a metal oxide sol. Here, the alkoxy silanes include a quadro-functional silane, a tri-functional silane with a glycidyl group, a tri-functional silane with an ureide alkyl group, and either a di-functional silane with a glycidyl group or tetrasulfane. In other words, the alkoxy silanes include four different silanes.

Furthermore, another coating film other than those for plastic lenses has been also proposed (see, for example. Patent Document 2). In this case, a primer layer made of a silane coupling agent is formed to keep a resin and a substrate in close contact with each other.
Patent Document 1: Japanese Unexamined Patent Application Publication No. 2003-138211
Patent Document 2: Japanese Unexamined Patent Application No. 2003-320540

A method for manufacturing a plastic lens according to the preamble of claim 1 is known from document US-B1-6939908. This document discloses a transparent and abrasion resistant coating which includes a transparent matrix, relatively large-sized abrasion resistant ceramic particles and nanosized ceramic particles for raising the index of refraction of the matrix to that of the abrasion resistant ceramic particles. The coating provides a scratch resistant coatings for use on plastic substrates, which are needed in a variety of applications such as, high index ophthalmic and sportswear lenses, as well as automobile side windows and aircraft cockpit applications.

### SUMMARY OF THE INVENTION

However, like the composition of Patent Document 1, the use of a mixture of two or more different silane coupling agents leads to a difficulty in reaction control in the mixture.
It may lead to provide a coating film with an unnecessary tint. In addition, any of other factors may cause other troubles on a lens.

In addition to the plastic lens coating, furthermore, other coating films for various applications have been also demanded to have both adhesiveness and abrasion resistance.

In view of the aforementioned, disadvantages, the present application discloses a functional silane compound that realizes a coat film having both adhesiveness and abrasion resistance and allowing a reaction thereof to be easily controlled. The present application also discloses a coating solution prepared using such a functional silane compound.
Further, the present invention provides a method for manufacturing a plastic lens using such a coating solution.

The present inventors have studied a compound that plays a role of a binder for improving an adhesion effect of a silane coupling agent.
Then, the present inventors have found a functional silane compound where the adhesiveness thereof is extensively improved by the addition of a silane coupling agent.

The functional silane compound includes silicon with a hydrolyzable functional group formed at the end of a chain molecule and one or more urea bonds in the middle of the chain molecule.
The chain molecule may have a branched portion therein or may have any of various functional groups.

Furthermore, examples of the hydrolyzable functional groups include alkoxy groups and halogens.
More preferably, the hydrolyzable functional group is any of alkoxy groups. The alkoxy groups include a methoxy group, an ethoxy group, a propyloxy group, a butoxy group, a pentyloxy group, and so on.

The coating solution is based on a silane coupling agent, and contains the above-described functional silane compound.
When actually using the coating solution, the functional silane compound and the silane coupling agent are liquefied by dissolving them in a solvent to prepare the coating solution.
The coating solution may optionally include inorganic fine particles as necessary in consideration of the intended-usage thereof.

The coating solution may be preferably used, for example, as a coating solution for forming a coating film by a wet process on a plastic lens. The coating film formed by a wet process on a plastic lens includes, for example, a hard coat film, a primer film, an organic anti-reflection film and a photochromic film.

The method for manufacturing a plastic lens of the present invention is defined in claim 1. Advantageous embodiments are defined in dependent claims.

The above-described functional silane compound has hydrolyzable silicon (silane group) on the end of chain molecule thereof, so that the compatibility between an organic compound and an inorganic compound can be improved,

Furthermore, the functional silane compound has one or more urea bonds in the chain molecule. Thus, the urea-bonded carbonyl group realizes an inter-atomic bond even with a slightly polarized functional group.
Therefore, for example, if hydrogen is exposed on the functional group of a subject (i.e., another substance as an object for the use of a functional silane compound), the oxygen of the urea bond is coupled with the hydrogen of the subject to form a hydrogen bond. Furthermore, for example, if halogen, oxygen, or nitrogen with a high electronegativity is exposed on the group of a subject, such an atom of the subject forms a hydrogen bond with hydrogen coupled with nitrogen of the urea bond.
In the carbonyl group, each of the remaining joint hands of carbon coupled with oxygen is coupled with, so that an electron cloud centering on the carbon will hardly collapse.
Therefore, the urea bond may keep a stable reactivity to the subject.

According to the above-described coating solution, the functional silane compound in the coating solution can improve the compatibility between an organic compound and an inorganic compound by providing the end of the chain molecule with hydrolyzable silicon (for example, silicon coupled with a silanol group or an alkoxy group, or silicon coupled with a halogen group).
Therefore, for example, when inorganic substance such as a pigment or an oxide sol is dispersed into the coating solution, the compatibility between such inorganic substance and the coating solution can be improved, and the dispersibility of the organic substance into the coating solution can be improved.

If a material to be coated is an inorganic substance, the functional silane compound in the coating solution causes hydrolysis to form a chemical bond with the surface of the material to be coated, thereby improving the adhesive force. As a result, the adhesiveness of the coating solution to the material to be coated is improved.

As described above, the carbonyl group of the urea bond is capable of binding to a compound as far as the compound is a slightly polarized one.
Specifically, examples of the binding structure of such a bindable compound include a urethane bond, a thiourethane bond, an episulfide bond, and an ether bond.
A plastic material with a thiourethane bond or an episulfide bond is applicable to a plastic lens substrate with a high refractive index. For example, when the coating solution is applied to the lens substrate, a coating film having excellent adhesiveness can be formed on the lens substrate.

Here, an exemplary state of a hydrogen bond between a thiourethane bond and a urea bond is shown below.

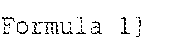

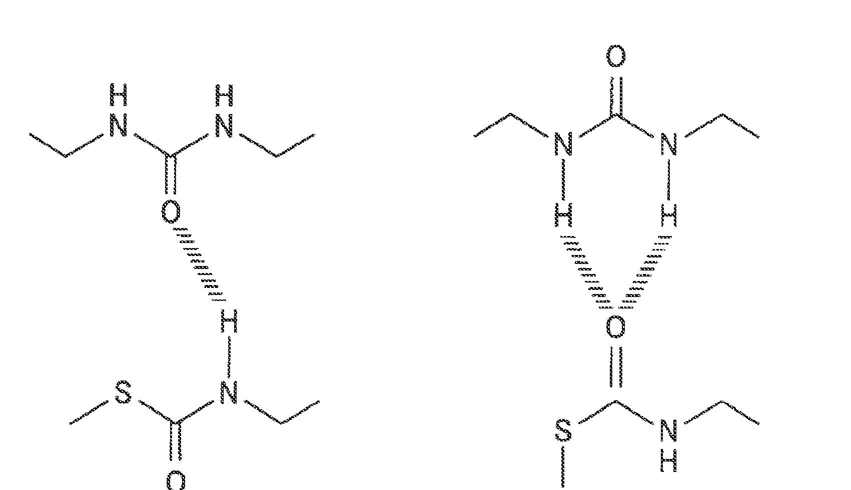

In addition, an exemplary state of a hydrogen bond between an ether bond and a urea bond is shown below.

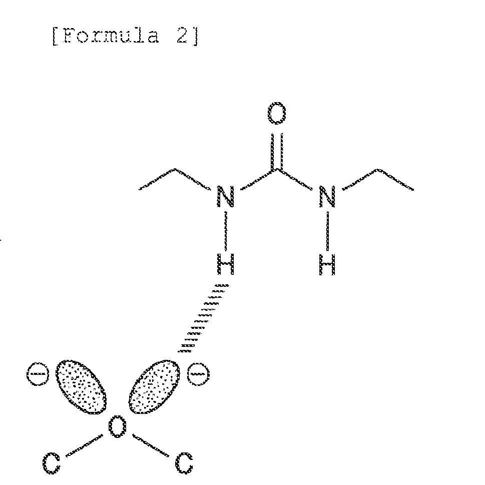

In this way, the negative electric charge portion around an oxygen atom of the ether bond forms a hydrogen bond with a hydrogen atom coupled with a nitrogen atom of the urea bond.

According to the above-described method for manufacturing a plastic lens of the present invention, the coating solution is prepared, which is then applied to a lens substrate to form a coating films and the coating film is hardened to form a coat layer on the lens substrate. Thereby, a coat layer can be formed on the lens substrate with good adhesiveness. Also, because the dispersibility of an inorganic material in the coating solution can be improved, the dispersibility of the inorganic material in the coat layer obtained by hardening can be improved.

According to the above-described functional silane compound, the compatibility between an organic compound and an inorganic compound can be improved. In addition, the carbonyl group of the urea bond realizes an inter-atomic bond even with a slightly polarized functional group. Therefore, the functional silane compound of the present invention can improve its adhesive strength to a subject.
In addition, the functional silane compound can keep a stable reactivity to the subject, so that the reaction control thereof can be easy.

The above-described coating solution can improve the dispersibility of an inorganic material to the coating solution. Thus, the organic material is hard to become a fragile point even when it is dispersed into the coating solution, resulting in that a strong film can be coated. In other words, the coating solution allows the formation of a strong coating film with abrasion resistance and impact resistance.
Further, because the polarity of a urea bond is given to the coating film itself, when forming films under and over the coating film, the coating film can firmly adhere to the upper and lower films as far as materials in the upper and lower films have polarity enough to realize a urea bond and a hydrogen bond.
Therefore, the coating solution can realize the adhesiveness and abrasion resistance of the coating film.

According to the above-described method for manufacturing a plastic lens, a coat layer can be formed on a lens substrate with good adhesiveness, and a coat layer having good adhesiveness with the lens substrate and other coating films in the lower layer and other coating films in the upper layer can be formed.
Also, because the dispersibility of an inorganic material can be improved also in the coat layer, it becomes possible to form a solid coat layer that has abrasion resistance and shock resistance.
Accordingly, according to the method for manufacturing a plastic lens of the present invention, it becomes possible to manufacture a plastic lens with a coat layer superior in adhesiveness and abrasion resistance.

### BRIEF DESCRIPTION OF THE DRAWINGS

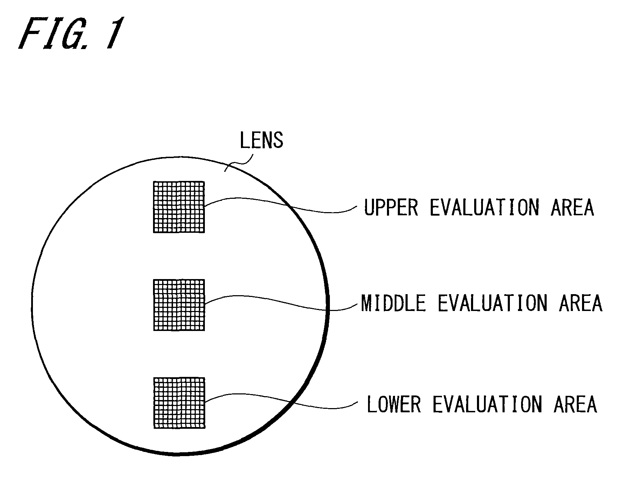

FIG. 1 is a schematic diagram illustrating a hard coat layer of a lens with cross-cut portions.

### DESCRIPTION OF THE PREFERRED EMBODIMENTS

The functional silane compound includes silicon with a hydrolyzable functional group formed at the end of a chain molecule and one or more urea bonds in the chain molecule.
The coating solution is based on a silane coupling agent and contains the functional silane compound .
The method for manufacturing a plastic lens of the present invention includes the steps of preparing the coating solution of the present invention, applying the coating solution to a lens substrate to form a coating film, and hardening the coating film to form a coat layer on the lens substrate.

The functional silane compound preferably includes only a single-bonded hydrocarbon between a hydrolyzable silane on the end of a chain molecule and a urea bond in the chain molecule.
If any of other functional groups is included in the chain molecule, the compound may cause an electric bias and suppress the effect of the urea bond.
If any of other functional groups and aromatic rings is included in the chain molecule, an interaction between the compounds increases and the compounds may aggregate together.

If two or more urea bonds are included in the above-described functional silane compound, it is preferable that there is a hydrocarbon with 1. to 10 carbon atoms or ether present between two urea bonds.

Examples of the functional silane compound include a large number of compounds. Some of these compounds will be illustrated below. 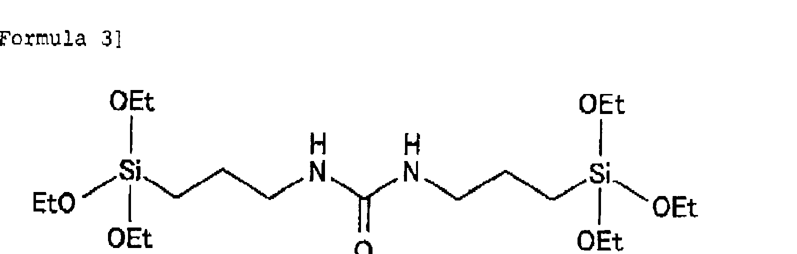 1,3-bis-(3-triethoxysilyl) propyl) urea
Functional groups on both ends of the compound are ethoxy groups, and a urea bond is included in the middle of a chain molecule. 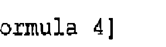 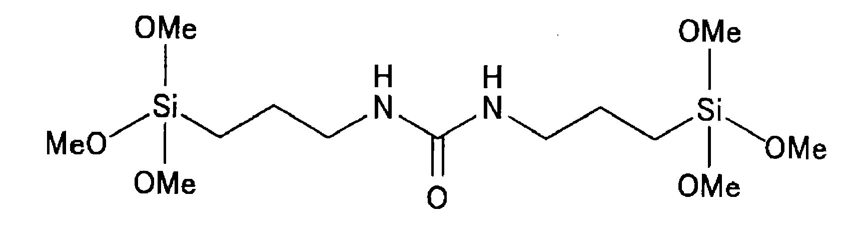 1,3-bis-(3-(trimethoxysilyl) propyl) urea
Functional groups on both ends of the compound are methoxy group, and a urea bond is included in the middle of a chain molecule. 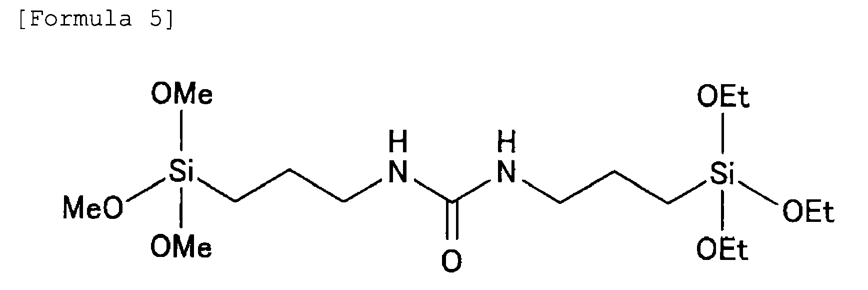 1-(3-(triethoxysilyl) propyl)-3-(3-(trimethoxysilyl) propyl) urea
A functional group on one end of the compound is a methoxy groups and a functional group of the other end thereof is an ethoxy group. A urea bond is included in the middle of a chain molecule. 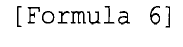 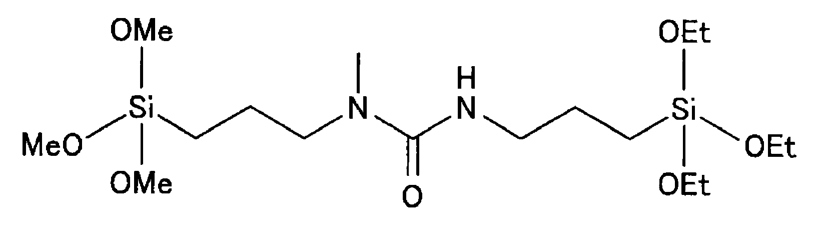 1-methyl-3-(3-(triethoxysilyl)propyl)-1-(3-(trimethox y silyl) propyl) urea
A group on one end of the compound is a methoxy group, and a functional group of the other end thereof is an ethoxy group. A urea bond is included in the middle of the chain molecule. A methyl group is coupled with one nitrogen atom of the urea bond. 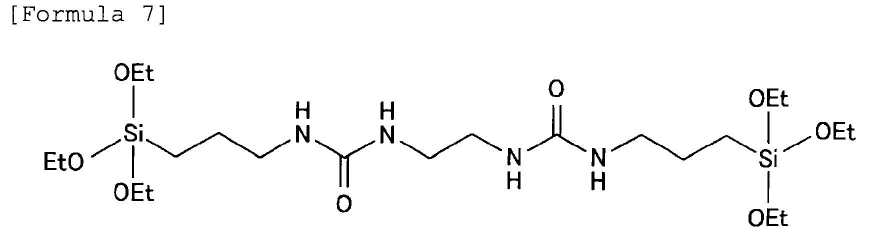 1 1'-(ethane-1, 2-diyl) bis (3-(3-(triethoxysilyl) propyl) urea)
Functional groups on both ends of the compound are ethoxy group, and two urea bonds are included in the middle of in the chain molecule. 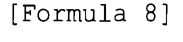 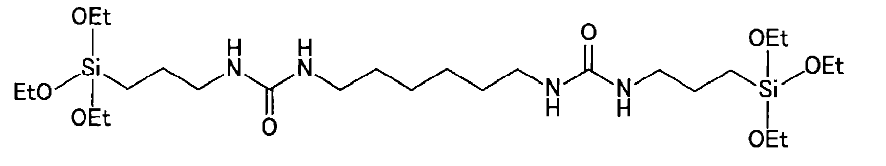 1 (hexane-1, 6-diyl) bis (3-(3-(triethoxysilyl) propyl) urea)
Functional groups on both ends of the compound are ethoxy groups, and two urea bonds are included in the middle of the chain molecule. The length of a hydrocarbon between two urea bonds of this example is longer than that of the previous example. 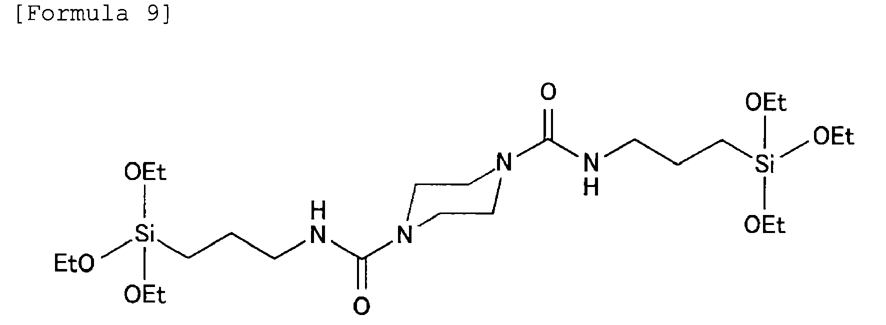 N1,N4-bis (3-(triethoxysilyl) propyl) piperazine-1,4-dicarboxamide 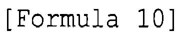 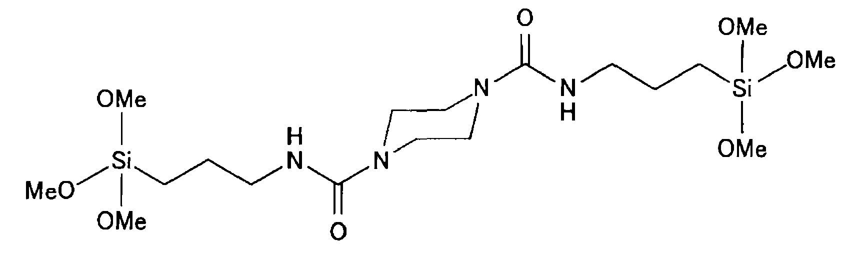 N1,N4-bis (3-(trimethoxysilyl) propyl) piperazine-1,4-dicarboxamide 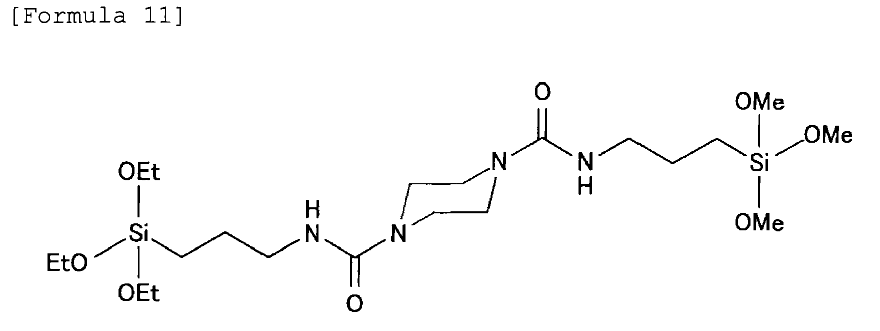 N1-(3-(triethoxysilyl) propyl)-N4-(3-(trimethoxysilyl) propyl) piperazine-1,4-dicarboxamide
Each of these three examples has a cyclic structure between two urea bonds.

Each of the above examples has a simple single chain molecule. In the following examples, branched chain molecules will be illustrated. 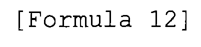 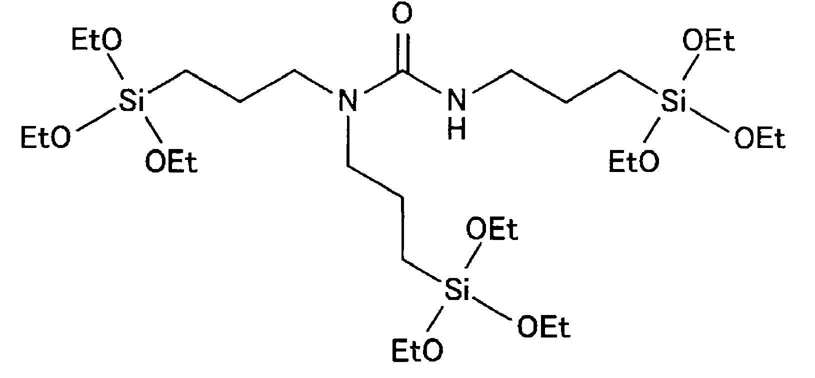 1,1,1,3-tris(3-(triethoxysilyl) propyl) urea
Two branched chain molecules are extended from one nitrogen atom of a urea bond. 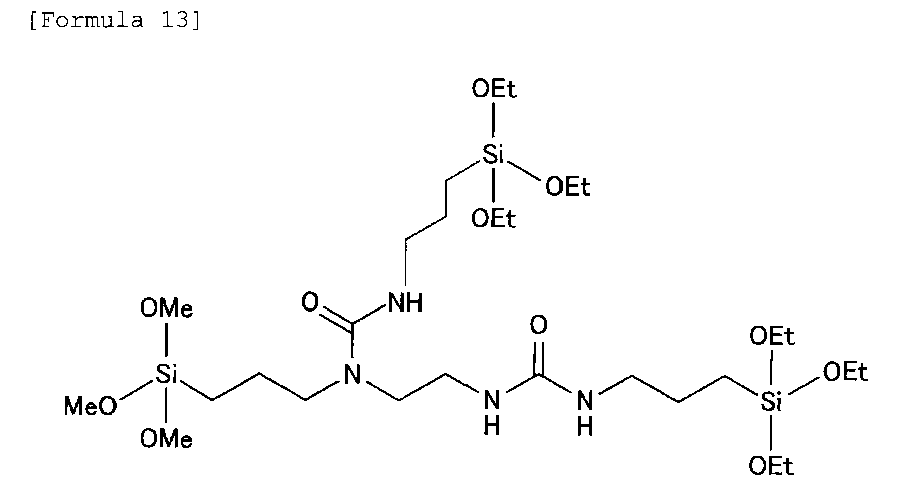 Ta nitrogen atom of one of two urea bonds is coupled with another chain molecule. 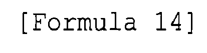 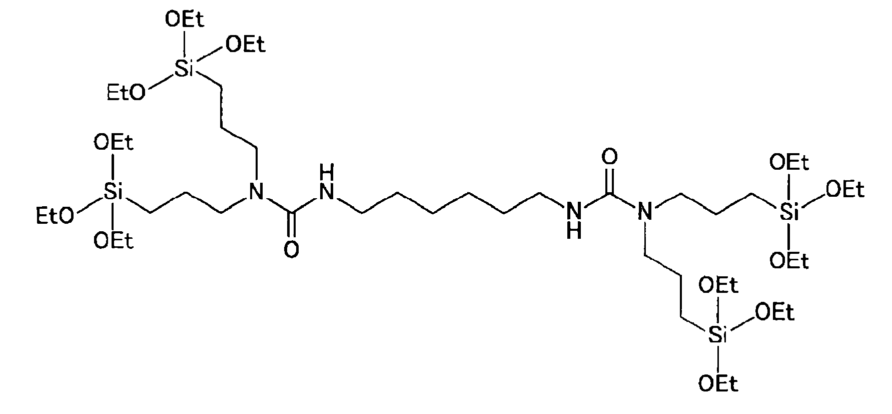 11'-(hexane-1, 6-diyl) bis (3,3-bis(3-(triethoxysilyl) propyl) urea)
Two branched chain molecules are extended from each nitrogen atom of two urea bonds. 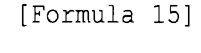 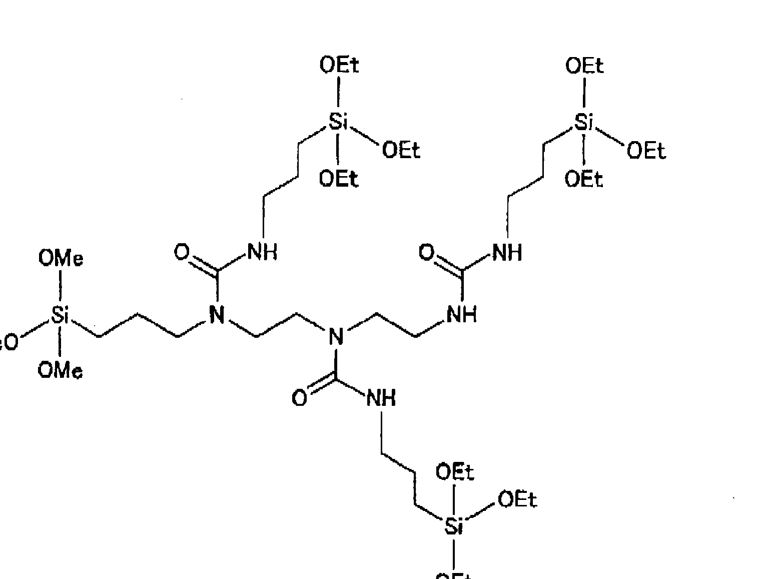 There are three urea bonds, and a branched chain molecule is extended from each of the left and center urea bonds,

In each of the compounds of the above examples, the effects of the functional silane compound can be obtained.
Obviously, the structure of the functional silane compound is not limited to any of the above examples. Alternatively, any of other structures may be applied,

### <Example of silane coupling agent that can be mixed with functional silane compound>

A silane coupling agent which can be mixed with the functional silane compound to prepare a coating solution is not limited to a specific one.
Specifically, for example, an organic silicon compound having a structure represented by the following formula (I) may be used.

R¹ₙSi (OR²) ₄₋ₙ (I)

"R¹" represent a hydrocarbon with 1 to 20 carbon atoms, and the presence or absence of any branch and the presence or absence of any functional group are not questioned. If there are two or more "R¹", these "R¹" may be identical or different from each other. "R²" represents a hydrolyzable functional group but is not limited to a specific one. Examples of "R²" include an alkyl group with 1 to 8 carbon atoms, an aryl group with 6 to 10 carbon atoms, an aralkyl group with 7 to 10 carbon atoms, and an acyl group with 2 to 10 carbon atoms. If there are two or more "OR²", "R²" may be identical or different from each other, "n" represents 0, 1, or 2.

Examples of the compound represented by the above-described formula (I) include the following compounds: methyl silicate, ethyl silicate, n-propyl silicate, isopropyl silicate, n-butyl silicate, sec-butyl silicate, tert-butyl silicate, tetra-acetoxy silane, methyl trimetoxy silane, methyl tripropoxy silane methyltriacetoxy silane, methyl tributoxy silane, methyl tripropoxy silane, methyl triamyloxy silane, methyl triphenoxy silane; methyl tribenzyloxy silane, methyl triphenethyloxy silane, glycidoxy methyltrimetoxy silane, glycidoxy methyltriethoxy silane, α-glycidoxy ethyl trimethoxy silane, s-glycidoxy ethyl triethoxy silane β-glycidoxy ethyl triethoxy silane, α-glycidoxy propyl trimethoxy silane, α-glycidoxy propyl triethoxy silane, β-glycidoxy propyl trimethoxy silane, β-glycidoxy propel triethoxy silane γ-glycidoxy propyl trimetoxy silane, γ-glycidoxy propyl triethoxysilane, γ-glycidoxy propyl tripropoxy silane, γ-glycidoxy propyl triphenoxy silane, α-glycidoxy butyl trimetoxy silane a-glycidoxybutyl triethoxy silane, β-glycidoxybutyl trimethoxy silane, β-glycidoxybutyl triethoxy silane, γ-glycidoxybutyl trimethoxy silane, γ-glycidoxybutyl triethoxy silane δ-glycidoxybutyl trimethoxy silane, δ-glycidoxybutyl triethoxy silane, (3, 4-epoxycyclohexyl) methyl trimetoxy silane, β-(3, 4-epoxycyclohexyl), (3, 4-epoxycyolohexyl) ethyltrimethoxy silane, β-(3, 4-epoxycyclohexyl) ethyltriethoxy silane β-(3,4-epoxycyciohexyl) ethyl tripropoxy silage β-(3, 4-epoxycyclohexyl) ethyltrybutoxy silane, β-(3,4-epoxycyclohexyl) ethyl triphenoxy silane, γ-(3,4-epoxycyclohexyl) propyltrimethoxy silane, γ- (3,4-epoxycyclohexyl) propyl triethoxy silane, δ-(3, 4-epoxycyclohexyl) butyltrimethoxy silane δ-(3, 4-epoxycyclohexyl) butyltriethoxy silane, glycidoxy methyl methyl dimethoxy silane, glycidoxy methyl methyldiethoxy silane, a-glycidoxy ethyl methyl dimethoxy silane, α-glycidoxy ethyl methyldiethoxy silane, β-glycidoxy ethyl methyl dimethoxy silane, β-glycidoxy ethyl methyldiethoxy silane, α-glycidoxy propyl methyldimethoxy silane, α-glycidoxy propyl methyldiethoxy silane, β-glycidoxy propyl methyldimethoxy silane, α-glycidoxy propyl methyldiethoxy silane, γ-glycidoxy propyl methyldimethoxy silane, γ-glycidoxypropylmethyldietoxy silane, γ-glycidoxy propylmethyl dipropoxy silane, γ-glycidoxy propyl methoxy silane, γ-glycidoxy propylmethyl diphenoxy silane, γ-glycidoxypropyl ethyl dimethoxy silane, γ-glycidoxy propylethyl diethoxy silane, γ-glycidoxy propyl vinyldimetoxy silane, γ-glycidoxy propyl vinyl diethoxy silane, γ-glycidoxy propyl phenyl dimethoxy silane, γ-glycidoxy propyl phenyl diethoxy silane, ethyltrimethoxy silane, ethyltriethoxy silane, vinyltrimetoxy silane, vinyltriacetoxy silane, vinyltriethoxy silane, phenyltrimethoxy silane, phenyltriethoxy silane, phenyl triacetoxy silane, γ-chloropropyltrimetoxy silane, γ-chloropropyl thoriacetoxy silane, 3,3,3-trifluropropyl trimethoxy silane, γ-methacryloyl oxypropyl trimethoxy silane, γ-mercapto propyltrimethoxy silane, γ-mercapto propyl triethoxy silane, β-cyano ethyltriethoxy silane, chloro methyl trimetoxy silane, chloro methyltriethoxy silane, N-(β-aminoethyl)-γ-aminopropyl trimethoxy silane, N-(β-aminoethyl)-γ-aminopropyl methyl dimethoxy silane, γ-aminopropyl methyl dimethoxy silane, N-(β-aminoethyl)-γ-aminopropyl methyl dimethoxy silane, N-(β-aminoethyl)-γ-aminopropyl methyldiethoxy silane, dimethyldimethoxy silane, phenylmethyldimethoxy silane, dimethyldiethoxy silane phenylmethyldiethoxy silane, γ-chloropropyl methyl dimethoxy silane, γ-chloropropyl methyldiethoxy silane, dimethyl diacetoxy silane, γ-methacryloyl oxypropyl methyl dimethoxy silane, γ-methacryloyl oxypropyl methyldiethoxy silane, γ-mercaptpropylmethyl dimethoxy silane, γ-mercapto propylmethyl diethoxy silane, methylvinyl dimethoxy silane, and methylvinyl diethoxy silane,

### <Example of inorganic fine particles that can be mixed with coating solution>

The inorganic fine particles forming the sol contained in the coating solution may include, but not specifically limited to, any kind of inorganic fine particles.
Various inorganic fine particles such as those of oxides and nitrides can be used.

Furthermore, in the case of applying such inorganic fine particles to the composition of a hard coat of a spectacle lens, there is a need of approximating the refractive index of a hard coat layer to the refractive index of a lens substrate.
If a sol made of an oxide with a high refractive index is employed, a hard coat layer with a high refractive index will be formed. If a sol made of an oxide with a low refractive index is employed, a hard coat layer with a low refractive index will be formed.

### <Examples of oxide>

Among the materials of inorganic fine particles, examples of oxides include silicon oxide (SiO₂), aluminum oxide (Al₂O₃), titanium, oxide (TiO2), zirconium dioxide (ZrO₂), tin oxide (SnO₂), beryllium oxide (BeO), and antimony oxide (Sb₂O₅).
The inorganic particles may include one of these oxides alone or may include two or more of them in combination.

### <Materials to be coated>

The functional silane compound is applicable to any of various paints, adhesive agents, and so on that contains silane coupling agents.
The surface of a material to be coated (also referred to as a coated material) has oxygen, nitrogen, or the like having an unshared electron pair. Thus the functional silane compound will exert its advantageous effects as long as the urea-bond portion thereof can form a hydrogen bond with the surface of the coated material.
Specific examples of a suitable coated material include metals (specifically, metals having oxide-layered (passivated) layers), various kinds of glass substrates, ceramic substrates, and plastic substrates.

The coating solution will not cause, in particular, tarnishing or excessive colouring when forming a coating film. Thus, it is suitably applied to any of transparent adhesive agents, paints, and so on.

### <Examples of suitable substrate used in a hard-coat preparing solution for plastic lens>

In the case of using the coating solution as a hard-coat preparing solution for plastic lenses, the applicable lens base is not limited to a specific one.
Specifically, examples of the substrate include a methacrylate homopolymer, a copolymer of methyl methacrylate and one or more other monomers, a diethylene glycol bisallyl carbonate homopolymer, a copolymer of diethylene glycol bisallyl carbonate and one or more other monomers, a sulfur-containing copolymer, a halogen copolymer, polycarbonate, polystyrene, polyvinyl chloride, unsaturated polyester, polyethylene terephthalate, polyurethane, polythiourethane, and a halogen copolymer with a polysulfide bond.

### <Manufacturing method of a plastic lens>

When manufacturing a plastic lens using the coating solution as a hard-coat preparing solution, the plastic lens may be manufactured, for example, in the following manner.
First, a plastic material to be used as a plastic lens substrate is prepared.
In addition, the coating solution is prepared. In other words, a coating solution containing the functional silane compound , a silane coupling agent, and oxide fine particles is prepared.
Next, the prepared coating solution is applied to the surface of the plastic substrate, and then thermally hardened to form a hard coat layer.
Subsequently, one or more antireflection layers are formed on the hard coat layer. Specifically, a coating solution for the antireflection layers is prepared and applied to the hard coat layer on the plastic substrate. The applied coating solution is then thermally hardened to form an antireflection layer.
Furthermore, a water-repellent layer may be formed on the antireflection layer if needed. Specifically, a coating solution for the water-repellent layer is prepared and then applied to the antireflection layer. The applied coating solution is then thermally hardened to form a water-repellent layer.

Heretofore, in plastic lenses, some includes a primer layer formed for the purpose of adhesive improvement between the substrate and the hard coat layer.
According to the present invention, in contrast, sufficient adhesiveness can be obtained even if such a primer layer is not formed for improving the adhesiveness with the substrate. This is because the plastic lens is manufactured using the coating solution as a hard-coat preparing solution, and the functional silane compound will ensure sufficient adhesiveness without, the need of a such primer layer.

Now, the manufacturing method will be described in detail with reference to representative examples of the functional silane compound.

### <Compound 1>

The name of Compound 1 is B-TESD: 1,3-bis-(3-(triethoxysilyl) propyl-) urea. The chemical formula of Compound 1 is as follows:

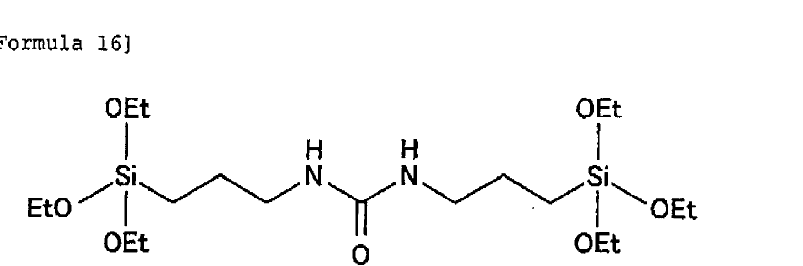

Compound 1 is an example or functional silane compounds having the following general formula: 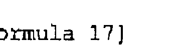 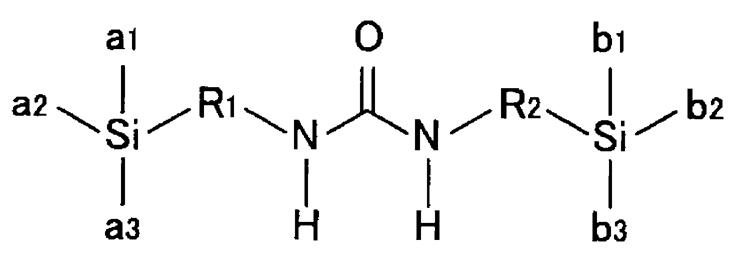 In the formula, R₁, and R₂ represent straight-chain hydrocarbons, a1 to a3 represent functional groups and at least one of them is a hydrolyzable functional group, and b1 to b3 represent functional groups and at least one of them is a hydrolyzable functional group.

An example of the synthesizing method of this compound 1 (B-TESU) will be now described.
Material 1: Υ-APS (Υ-aminopropyltriethoxysilane)
Material 2: Υ-IPS (Υ-isocyanatopropyltri ethoxy silane)
B-TESU can be produced by reacting Υ-AFS (material 1) with Υ-IPS (material 2)

In order to suppress undesired influences by a rapid reaction (for example, heat generation by reaction heat), a stable solvent to both materials may be suitably chosen, and the reaction may be then carried out in the presence of such a solvent. Examples of the solvent include non-protonic polar solvents such as polypropylene glycol monomethyl ether (PGN) and diacetone alcohol (DAA).

The reaction formula of the above-described B-TESU synthesis method is shown below.

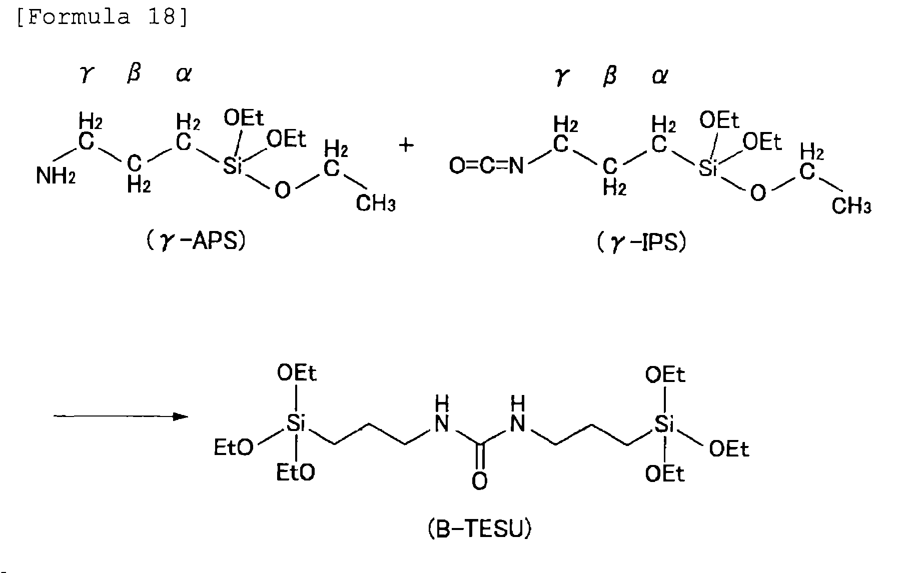

Here, any of various catalysts may be added to the reaction mixture to improve the yield of B-TEDU obtained by the synthesis.
Furthermore, if needed, a purification procedure for enhancing the purity or 3-TESU may be carried out to perform sorting.

### <Compound 2>

Next, Compound 2, a functional silane compound with two urea bonds and one branch, will be now illustrated.
The structural formula of Compound 2 is as follows:

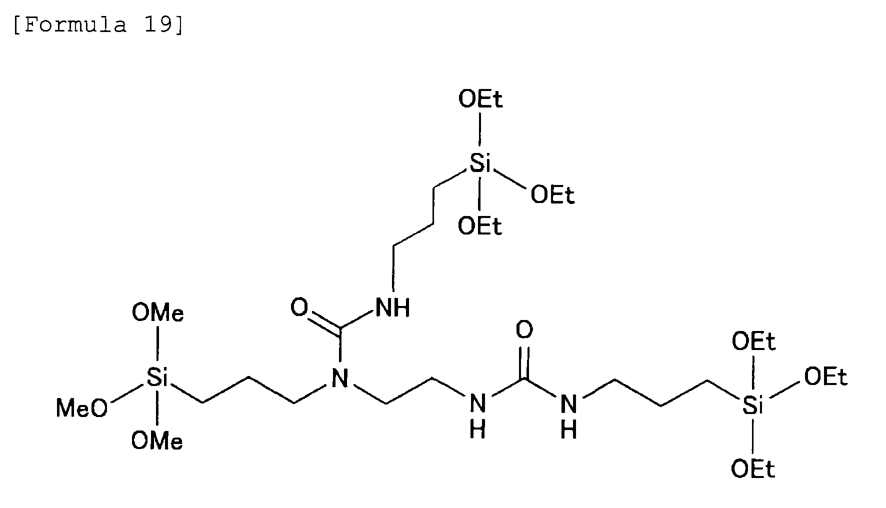

Compound 2 is an example of functional silane compounds having the following general formula: 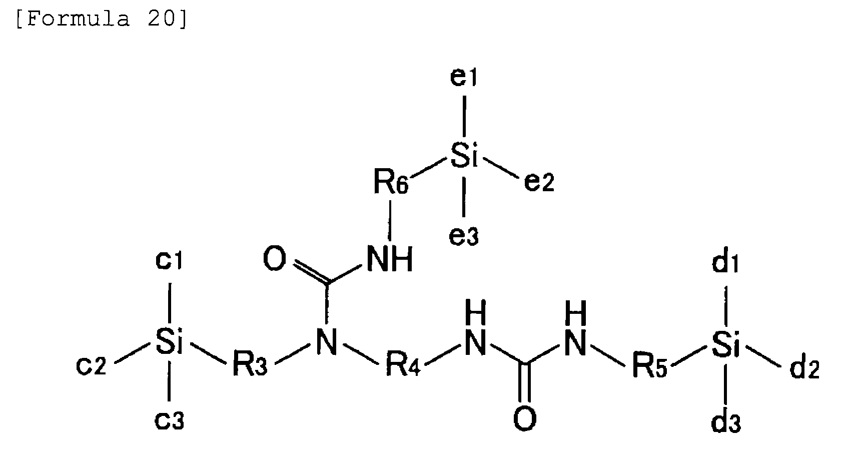 In the formula, R₃, R₄, R₅, and R₆ represent straight-chain hydrocarbons, respectively; c1 to c3 represent functional groups and at least one of them is a hydrolyzable functional group; d1 to d3 represent functional groups and at least one of them is a hydrolyzable functional group; and e1 to e3 represent functional groups and at least one of them A a hydrolyzable functional group.

An example of the synthesizing method of this compound 2 will be now described.
Material 1: β-AEAPS (β-aminoethyl aminopropyl trimethoxy silane)
Material 2: γ-IPS (γ-Isocyanatopropyltri ethoxy silane)
Compound 2 can be produced by reacting β-AEAPS (material 1) with Υ-IPS (material 2) at a ratio of 1:2.

The reaction formula of the synthesis method of the above-described Compound 2 is shown below.

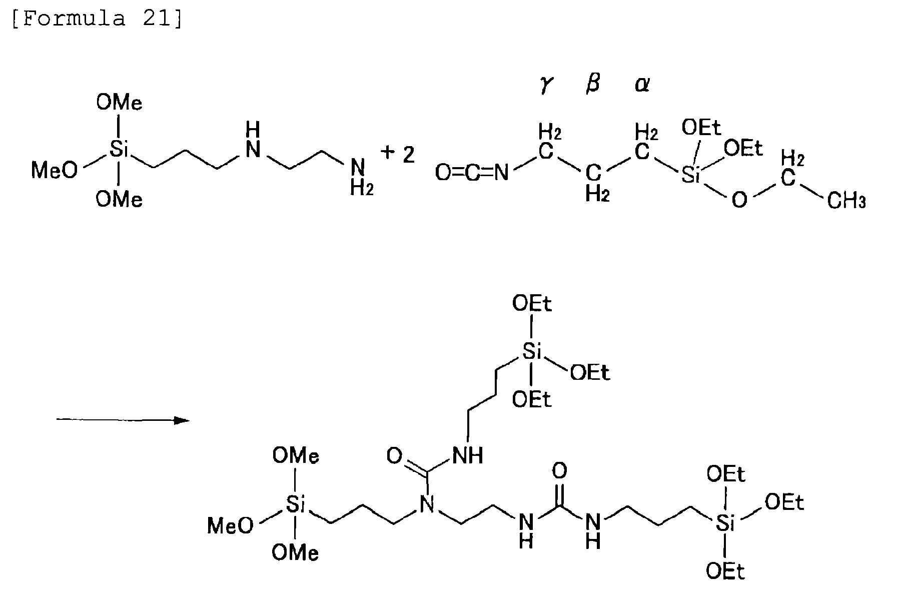

### <Compound 3>

Next, Compound 3, a functional silane compound with four urea bonds and two branches, will be illustrated.
The structural formula of compound 3 is as follows:

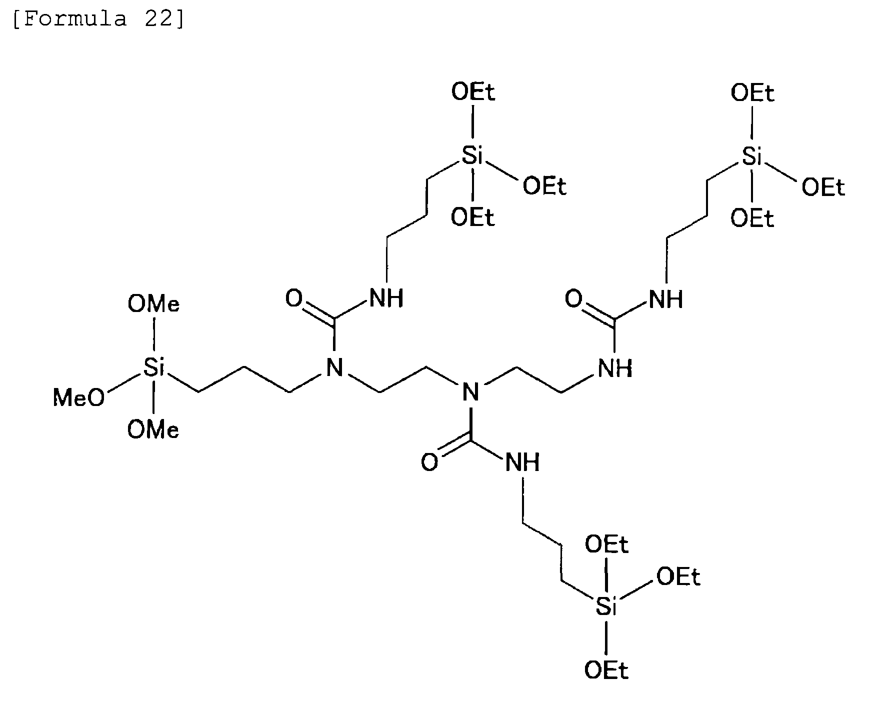

Compound 3 is an example of functional silane compounds having the following general formula:[Formula 23]

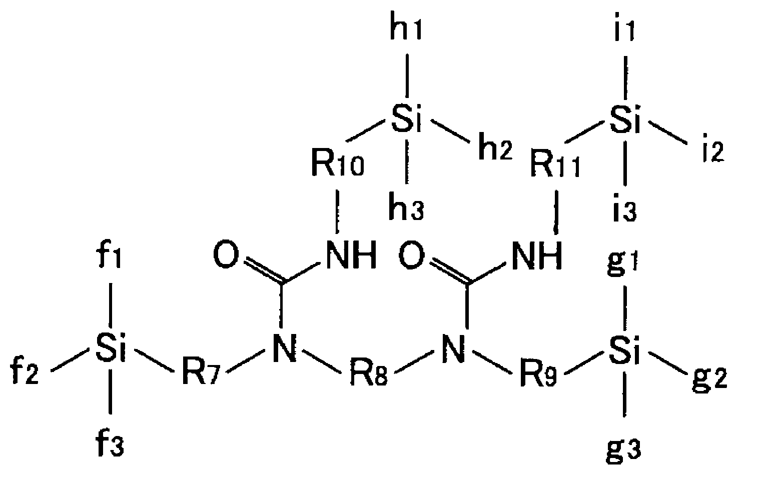

In the formula, R₇, R₈, R₉, R₁₀, and R₁₁ represent straight-chain hydrocarbons, respectively; f1 to f3 represent functional groups and at least one of them is a hydrolyzable functional group; g1 to g3 represent functional groups and at least one of them is a hydrolyzable functional group; h1 to h3 represent functional groups and at least one of them is a hydrolyzable functional group; and i1 to i3 represent functional groups and at least one of them is a hydrolyzable functional group.

An example of the synthesizing method of this compound 3 will be now described.
Material 1: TMS-DETA (3-Trimethoxysilyl propyl) (diethylene triamine)
Material 2: Υ-IPS (Υ-isocyanate propyl triethoxy silane)
Compound 3 can be produced by reacting TMS-DETA (material 1) with Υ-IPS (material 2) at a ratio of 1:3.

The reaction formula of the synthesis method of the above-described compound 3 is shown below.

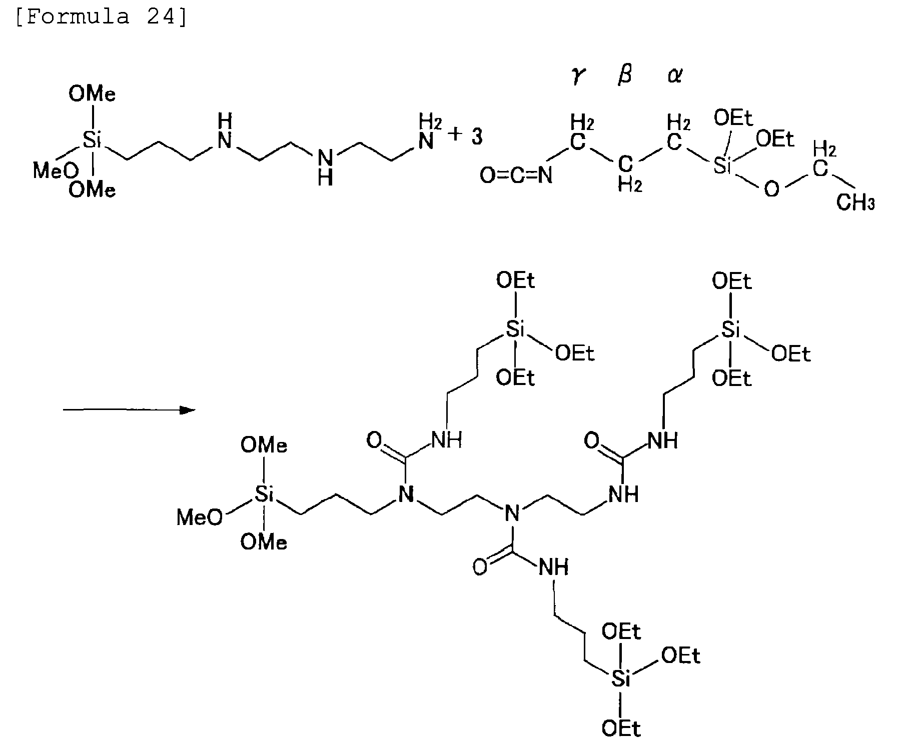

### (Examples)

A hard coat solution (coating solution) for a plastic lens was actually prepared and then applied to a substrate to form a hard coat layer. The resulting hard coat layer was subjected to evaluation of adhesiveness and film hardness.

<Example 1: Coating Solution 1>
A hard coat solution (coating solution) for a plastic lens containing Compound 1 (B-TESU) was prepared by the following procedures.
First, a B-TESU-containing solution was prepared and provided as a first solution,
The materials of the first solution were diacetone alcohol (DAA), propylene glycol monomethyl ether (PGM) (γ-APS, and γ-IPS. These materials were mixed in the proportions shown in Table 1.

**[Table 1]**

| Material | Weight: | Mole ratio |
|---|---|---|
| Diacetone alcohol (DAA) | 55 | |
| Propylene glycol monomethyl ether (PGM) | 55 | |
| γ-APS | 3.9 | 1 |
| γ-IPS | 4.35 | 1 |
| Total weight | 118.25 | - |

Next, the prepared first solution was used in pre-hydrolysis of silane in the silane compound. The procedure of hydrolysis was as follows:
(1) The first solution was mixed with Υ-GPS well.
(2) Next, the Mixture was subjected to hydrolysis by mixing with a. 0.01 M hydrochloric acid solution. The hydrolysis makes the end of alkoxy silane into silanol.

Thus, a second solution was obtained. The amount of each material used was listed in Table 2 below. In this example, γ-GPS occupies 90 wt% in the total amount of the silane compound.

**[Table 2]**

| Material | Weight | |
|---|---|---|
| Fist solution | 118.25 | |
| γ-GPS | 74.25 | |
| 0.01mol/L HCl | 19.64 | |
| Total weight | 212.14 | |

Subsequently, a hard coat solution (coating solution) was prepared using the obtained second solution. The preparation was carried out as follows:
(1) The second solution was mixed with a sol solution and PGM. Here, the sol solution contains a sol of zirconia-based oxide fine particles. The sol was prepared by mixing oxide fine particles with a dispersion solution at the ratio of 40:60.
The amount of each material used was listed in Table 3 below. The weight ratio (mass ratio) of a silane compound and sol is set to about 1:1.

**[Table 3]**

| Material | Weight | |
|---|---|---|
| Second solution | 192.85 | |
| PGM | 98.86 | |
| Sol solution (Oxide fine particles : Dispersion = 40 : 60) | 187.03 | |
| Total weight | 478.74 | |

(2) To the resulting mixture, a leveling agent, a curing catalyst, a solvent and so on were added arbitrarily, making up the total volume to 500 g.
Thus, a hard coat solution of Example 1 (Coating Solution 1) was obtained.

<Example 2: Coating Solution 2>
A hard coat solution (coating solution) for a plastic lens containing Compound 2 was prepared by the following procedures.
First, a solution containing compound 2 was prepared as a first solution.
The first solution was prepared using DAA, PGM, β-AEAPS, and γ-IPS as materials. These materials were mixed in the proportions shown in Table 4 below.

**[Table 4]**

| Material | Weight | Mole ratio |
|---|---|---|
| Diacetone alcohol (DAA) | 55 | |
| Propylene glycol monomethyl ether (PGM) | 55 | |
| γ-APS | 2.43 | 1 |
| γ-IPS | 5.82 | 2 |
| Total weight | 118.25 | - |

Next, a second solution was prepared using the prepared first solution in pre-hydrolysis of silane in the silane compound in a manner similar to that of Example 1.
Subsequently, a hard coat solution (coating solution) was prepared using the obtained second solution in a manner similar to that of Example 1.
Thus, the hard coat solution of Example 2 (Coating Solution 2) was obtained.

<Example 3: Coating Solution 3>
A hard coat solution (coating solution) for a plastic lens containing Compound 3 was prepared by the following procedures.
First, a solution containing compound 3 was prepared as a first solution.
The first solution was prepared using DAA, PGM, TMS-DETA, and γ-IPS as materials. These materials were mixed in the proportions shown in Table 5 below.

**[Table 5]**

| Material | Weight | Mole ratio |
|---|---|---|
| Diacetone alcohol (DAA) | 55 | |
| Propylene glycol monomethyl ether (PGM) | 55 | |
| TMS-DETA | 2.17 | 1 |
| γ-IPS | 6.08 | 3.000 |
| Total weight | 118.25 | - |

Next, the prepared first solution was used in pre-hydrolysis of silane in the silane compound in a manner similar to that of Example 1, thereby obtaining a second solution.
Subsequently, a hard coat solution (coating solution) was prepared using the obtained second solution in a manner similar to that of Example 1.
Thus, the hard coat solution of Example 3 (Coating Solution 3) was obtained.

<Comparative Example 1: Coating Solution 4>
As Comparative Example 1, a hard coat solution (coating solution) for a plastic lens that does not contain any silane compound other than γ-GPS was prepared by the following procedures.
First, a first solution was prepared using DAA and PGM as materials. These materials were mixed in the proportions shown in Table 6 below.

**[Table 6]**

| Material | Weight | Mole ratio |
|---|---|---|
| Diacetonealcohol (DAA) | 55 | |
| Propylene glycol monomethyl ether (PGM) | 55 | |
| Total weight | 110 | - |

Next, a second solution was prepared using the prepared first solution in pre-hydrolysis of silane in the silane compound in a manner similar to that of Example 1, except that the materials were mixed in proportions shown in Table 7 below.

**[Table 7]**

| Material | Weight | |
|---|---|---|
| Fist solution | 110 | |
| γ-GPS | 82.5 | |
| 0.01mol/L HCl | 19.61 | |
| Total weight | 212.11 | |

Subsequently, a hard coat solution (coating solution) was prepared using the obtained second solution in a manner similar to that of Example 1.
Thus, the hard coat solution of Comparative Example 1 (Coating Solution 4) was obtained.

<Comparative Example 2: Coating Solution 5>
As Comparative Example 2, a hard coat solution (coating solution) for a plastic lens that contains a silane compound having a urea bond and a Si-O-X-free end (Compound A) was prepared by the following procedures.
Firsts a first solution was prepared using DAA, PGM, n-butylamine (BuA), and γ-IPS as materials. These materials were mixed in the proportions shown in Table 8 below.

**[Table 8]**

| Material | Weight | Mole ratio |
|---|---|---|
| Diacetone alcohol (DAA) | 55 | |
| Propylene glycol monomethyl ether (PGM) | 55 | |
| BuA (n-butyl amine) | 1.88 | 1 |
| γ-IPS | 6.37 | 1 |
| Total weight | 118.25 | - |

Next, a second solution was obtained using the prepared first solution in pre-hydrolysis of silane in the silane compound in a manner similar to that of Example 1, except that the materials were mixed in proportions shown in Table 9 below.

**[Table 9]**

| Material | Weight | |
|---|---|---|
| Fist solution | 118.25 | |
| γ-GPS | 74.25 | |
| 0.01mol/L HCl | 19.61 | |
| Total weight | 212.11 | |

Subsequently, a hard coat solution (coating solution) was prepared using the obtained second solution in a manner similar to that of Example 1.
Thus, the hard coat solution of Comparative Example 2 (Coating Solution 5) that contains Compound A was obtained,
Compound A is a compound named 1-(3-(triethoxysilyl) propyl)-3-butyl urea and represented by the following chemical formula:

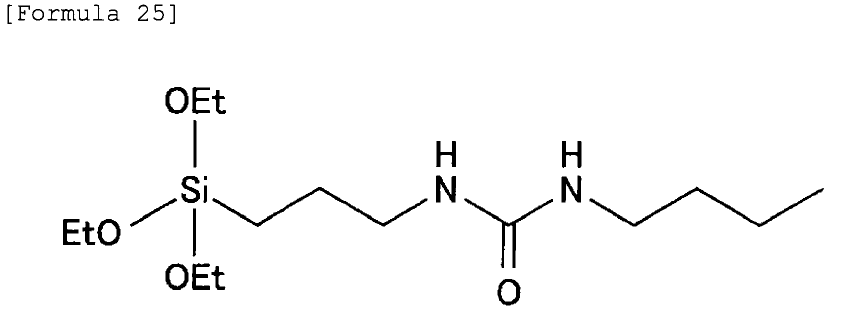

<Comparative Example 3: Coating Solution 6>
As Comparative Example 3, a hard coat solution (coating solution) for a plastic lens that contains a silane compound having no urea bond and a Si-O-X-free end (Compound B) was prepared by the following procedures.
First, a first solution was prepared using DAA, PGM, isopropyl alcohol (IPA), and γ-IPS as materials. These materials were mixed in the proportions shown in Table 10 below.

**[Table 10]**

| Material | Weight | Mole ratio |
|---|---|---|
| Diacetone alcohol (DAA) | 55 | |
| Propylene glycol monomethyl ether (PGM) | 55 | |
| Isopropyl alcohol (IPA) | 1.61 | 1 |
| γ-IPS | 6.64 | 1 |
| Total weight | 118.25 | - |

Next a second solution was prepared using the prepared first solution in pre-hydrolysis of silane in the silane compound in a manner similar to that of Comparative Example 2 (see Table 9).
Subsequently, a hard coat solution (coating solution) was prepared using the obtained second solution in a manner similar to that of Example 1.
Thus, the hard coat solution of Comparative Example 3 (Coating Solution 6) that contains Compound 3 was obtained.
Compound B is a compound named isopropyl-3-(triethoxysilyl) propylcarbamate and represented by the following chemical formula:

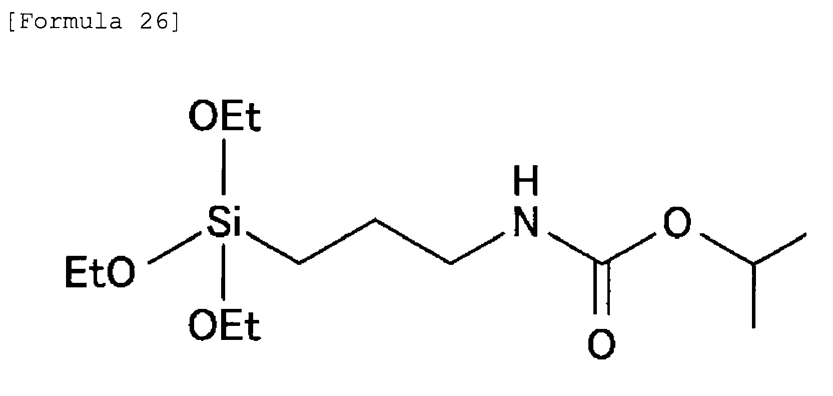

<Comparative Example 4: Coating Solution 7>
As comparative Example 4, a hard coat solution (coating solution) for a plastic lens that contains a silane compound having Si-O-X on all the ends thereof but no urea bond (Compound C) was prepared by the following procedures.
First, a first solution was prepared using DAA, PGM, ethylene glycol (EG), and γ-IPS as materials. These materials were mixed in the proportions shown in Table 11 below.

**[Table 11]**

| Material | Weight | Mole ratio |
|---|---|---|
| Diacetone alcohol (DAA) | 55 | |
| Propylene glycol monomethyl ether (PGM) | 55 | |
| Ethylene glycol (EG) | 0.92 | 1 |
| γ-IPS | 7.33 | 2 |
| Total weight | 118.25 | - |

Next, a second solution was prepared using the prepared first solution in pre-hydrolysis of silane in the silane compound in a manner similar to that of Comparative Example 2 (see Table 9).
Subsequently a hard coat solution (coating solution) was prepared using the obtained second solution in a manner similar to that of Example 1.
Thus, the hard coat solution of Comparative Example 4 (Coating Solution 7) that contains Compound C was obtained.
Compound C is a compound named ethane-1,-2-diyl bis (3-(triethoxysilyl) propylcarbamate) and represented by the following chemical formula:

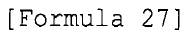

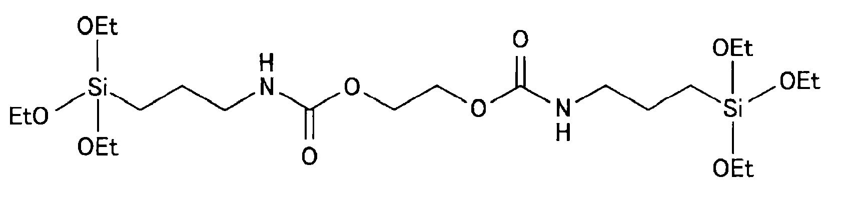

<Comparative Example 5: a Coating Solution 8>
As Comparative Example 5, a hard coat solution (coating solution) for a plastic lens that contains a silane compound having Si-O-X on all the ends thereof but no urea bond (Compound D) was prepared by the following procedures.
First, a first solution was prepared using DAA, polypropylene glycol monomethyl ether (PGM), bismercaptomethyl dithiane (BMMD), and γ-IPS, These materials were mixed in the proportions shown in Table 12.

**[Table 12]**

| Material | Weight | Mole ratio |
|---|---|---|
| Diacetone alcohol (DAA) | 55 | |
| Propylene glycol monomethyl ether (PGM) | 55 | |
| Bismercaptomethyl dithiamine (BMMD) | 2.48 | 1 |
| γ-IPS | 5.77 | 2 |
| Total weight | 118.25 | - |

Next, a second solution was prepared using the prepared first solution in pre-hydrolysis of silane in the silane compound in a manner similar to that of Comparative Example 2 (see Table 9).

Subsequently, a hard coat solution (coating solution) was prepared using the obtained second solution in a manner similar to that of Example 1.

Thus, the hard coat solution of Comparative Example 5 (Coating Solution 8) that contains Compound D was obtained.

Compound D is a compound named S'-1,4-dithiane-2,5-diyl bis (3-(triethoxysilyl) propyl carbamothioate) and represented by the following chemical formula:

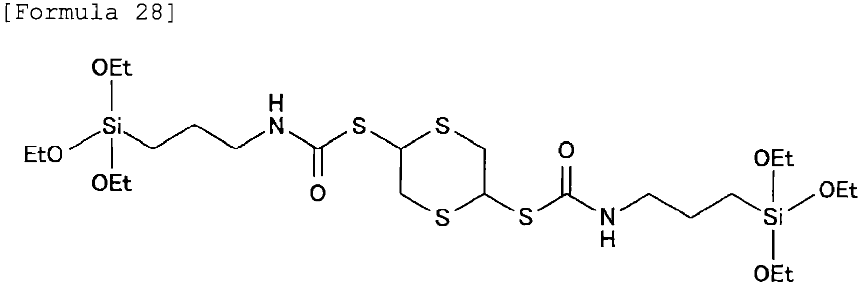

### <Hard-coat film formation test>

Each of Coating Solutions 1 to 8 was applied to each of five different plastic lens substrates made of different materials to form a hard coat layer thereon.

The materials for plastic lens substrate were as follows:
CR39: Allyl diglycol carbonate resin
PNX: Urethane resin (TRIVEX)
EYAS (manufactured by Hoya Corp.): Thiourethane resin (refractive index 1.6)
EYNOA (manufactured by Hoya Corp.): Thiourethane resin (refractive index 1.67)
EYRY (manufactured by Hoya Corp.): Episulphide resin (refractive index 1.70)

A hard coat layer was formed on the substrate by the following method:
Each of plastic lens substrates was dipped in each of the Coating Solutions 30 seconds by a dipping method.
Each of the plastic lens substrate was pulled out of each of the Coating Solutions at a rate of 30 cm/min, followed by hardening at 110°C for 60 minutes. Thus, a hard coat layer was formed on each of the plastic lens substrates.

The resulting hard coat layers were evaluated, respectively. The evaluation was performed with respect to (1) adhesiveness and (2) film hardness,
(1) Evaluation of adhesiveness
   A hard coat film was cross-cut along grid lines drawn at a distance of 1.5 mm to form 100 pieces, and a pressure sensitive adhesive tape (cellophane tape manufactured by NICHIBAN Co., LTD.) was strongly attached to the cross-cut portions of the hard coat film having the grid lines. Then, the pressure sensitive adhesive tape was rapidly peeled off, and the presence or the absence of detached pieces of the hardened film was examined.
   As shown in FIG. 1, three different areas on each side of convex and concave faces (front and back sides) of the lens were examined. Here, the three areas are located on the upper, middle, and lower portions on the surface of the lens. Therefore, the measurement was performed on three different areas on each side of the lens.

(2) Evaluation of film hardness
The surface of the lens was rubbed with steel wool to evaluate the scratch resistance thereof. The steel wool used for the evaluation was BONSTAR (trade name) (#1000, manufactured by Nihon Steel Wool Co., Ltd.), and the evaluation was conducted under the following conditions:
Addition load: 2000 g
Number of rubbings: 20 reciprocating movements

The criteria of the evaluation of film hardness were as follows:
5: The number of scratches is not more than five
4: The number of scratches is 10 to 20
3: The number of scratches is 30 to 100
2: The number of scratches is 100 or more
1: The hard coat is not remained.
Here, 5 to 10 scratches were evaluated as 4.5.

The results of the evaluation were shown in Tables 13 to 20. The results of the hard coat solution of Example 1 are listed in Table 13, the results of the hard coat solution of Example 2 are listed in Table 14, the results of the hard coat solution of Example 3 are listed in Table 15, the results of the hard coat solution of Comparative Example 1 are listed in Table 16, the results of the hard coat solution of Comparative Example 2 are listed in Table 17, the results of the hard coat solution of Comparative Example 3 are listed in Table 18, the results of the hard coat solution of Comparative Example 4 are listed in Table 19, and the results of the hard coat solution of Comparative Example 5 are listed in Table 20.

**[Table 13]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 100 | 5 |
| | Middle | 100 | 100 | 100 | 100 | 100 | |
| | Lower | 100 | 100 | 100 | 100 | 100 | |
| Convex | Upper | 100 | 100 | 100 | 100 | 100 | |
| | Middle | 100 | 100 | 100 | 100 | 100 | |
| | Lower | 100 | 100 | 100 | 100 | 100 | |

**[Table 14]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 100 | 4.5 |
| | Middle | 100 | 100 | 100 | 100 | 100 | |
| | Lower | 100 | 100 | 100 | 100 | 100 | |
| Convex | Upper | 100 | 100 | 100 | 100 | 100 | |
| | Middle | 100 | 100 | 100 | 100 | 100 | |
| | Lower | 100 | 100 | 100 | 100 | 100 | |

**[Table 15]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 100 | 4.5 |
| | Middle | 100 | 100 | 100 | 100 | 100 | |
| | Lower | 100 | 100 | 100 | 100 | 100 | |
| Convex | Upper | 100 | 100 | 100 | 100 | 100 | |
| | Middle | 100 | 100 | 100 | 100 | 100 | |
| | Lower | 100 | 100 | 100 | 100 | 100 | |

**[Table 16]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 0 | 0 | 5 |
| | Middle | 100 | 100 | 100 | 0 | 0 | |
| | Lower | 100 | 100 | 100 | 0 | 0 | |
| Convex | Upper | 100 | 100 | 100 | 0 | 0 | |
| | Middle | 100 | 100 | 100 | 0 | 0 | |
| | Lower | 100 | 100 | 100 | 0 | 0 | |

**[Table 17]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 95 | 3 |
| | Middle | 100 | 100 | 100 | 100 | 70 | |
| | Lower | 100 | 100 | 100 | 100 | 88 | |
| Convex | Upper | 100 | 100 | 100 | 95 | 95 | |
| | Middle | 100 | 100 | 100 | 86 | 70 | |
| | Lower | 100 | 100 | 100 | 100 | 60 | |

**[Table 18]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 85 | 100 | 80 | 3 |
| | Middle | 100 | 100 | 95 | 100 | 90 | |
| | Lower | 100 | 100 | 90 | 100 | 90 | |
| Convex | Upper | 100 | 100 | 95 | 100 | 95 | |
| | Middle | 100 | 100 | 95 | 100 | 80 | |
| | Lower | 100 | 100 | 98 | 100 | 75 | |

**[Table 19]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 100 | 3 |
| | Middle | 100 | 100 | 100 | 100 | 100 | |
| | Lower | 100 | 100 | 100 | 100 | 100 | |
| Convex | Upper | 100 | 100 | 100 | 100 | 98 | |
| | Middle | 100 | 100 | 100 | 100 | 80 | |
| | Lower | 100 | 100 | 100 | 100 | 98 | |

**[Table 20]**

| Evaluation of adhessiveness | | | | | | | |
|---|---|---|---|---|---|---|---|
| Concave/Convex | Position | CR-39 | PNX | EYAS | EYNOA | EYRY | Film hardness |
| Concave | Upper | 100 | 100 | 100 | 100 | 100 | 2 |
| | Middle | 100 | 100 | 100 | 100 | 100 | |
| | Lower | 100 | 100 | 100 | 100 | 100 | |
| Convex | Upper | 100 | 100 | 100 | 100 | 100 | |
| | Middle | 100 | 100 | 100 | 100 | 100 | |
| | Lower | 110 | 100 | 100 | 100 | 100 | |

As shown in Tables 13 to 15, when using the coating solutions of Examples 1 to 3, the resulting hard coat layers showed good adhesiveness on five different substrates and showed sufficient film hardness.

As shown in Table 16, when using the coating solution of Comparative Example 1, the resulting hard coat layer showed good adhesiveness on CR-39, PNX and EYAS but no adhesiveness on EYNOA and EYRY.

As shown in Table 17, wren using the coating solution of Comparative Example 2, the resulting hard coat layer showed good adhesiveness on CR-39 and PNX but insufficient adhesiveness on EYAS, EYNOA, and EYRY. In addition, poor film hardness was also observed.

As shown in Table 18, when using the coating solution of Comparative Example 3, the resulting hard coat layer showed good adhesiveness on CR-39, PNX, and EYNOA but insufficient adhesiveness on EYAS and EYRY. In addition, poor film hardness was also observed.

As shown in Table 19, when using the coating solution of Comparative Example 4, the resulting hard coat layer showed good adhesiveness on CR-39, PNX, EYAS, and EYNOA but insufficient adhesiveness on EYRY. In addition, poor film hardness was also observed.

As shown in Table 20, when using the coating solution of Comparative Example 5, the resulting hard coat layer showed good adhesiveness on five different substrates but showed extremely poor film hardness.

As is evident from the above results, by preparing a coating solution using a silane compound having Si-O-X on the ends of the chain and a urea bond, it becomes possible to prepare a hard coat layer having good adhesiveness to each of five different substrates and sufficient film hardness.

The present invention is not limited to the aforementioned embodiment, and various modifications thereof may occur within the scope of the attached claims.

## Claims

1. A method for manufacturing a plastic lens, including the steps of preparing a coating solution, applying the coating solution to a lens substrate to form a coating film, and hardening the coating film to form a coat layer on the lens substrate, **characterised in that** the coating solution prepared in the coating solution preparing step includes a silane-coupling agent and a functional silane compound that includes silicon with a hydrolyzable functional group formed at an end of a chain molecule and one or more urea bonds in the middle of the chain molecule, wherein the lens substrate is made from a material containing any of a urethane bond, a thiourethane bond, an episulfide bond, and an ether bond.

2. The method for manufacturing a plastic lens according to claim 1, wherein the coating solution preparing step includes mixing the coating solution with inorganic fine particles.

3. The method for manufacturing a plastic lens according to claim 1 or claim 2, wherein the lens substrate contains a sulfur polymer.

## Patentansprüche

1. Verfahren zur Herstellung einer Kunststofflinse, umfassend die Schritte des Bereitstellens einer Beschichtungslösung, des Aufbringens der Beschichtungslösung auf ein Linsensubstrat, um einen Beschichtungsfilm zu bilden, und des Aushärtens des Beschichtungsfilms, um eine Beschichtungslage auf dem Linsensubstrat zu bilden, **dadurch gekennzeichnet, dass** die Beschichtungslösung, die in dem Schritt der Bereitstellung der Beschichtungslösung bereitgestellt wird, ein Silan-Kopplungsagens und eine funktionale Silan-Verbindung enthält, die Silizium enthält, mit einer hydrolisierbaren funktionalen Gruppe, die an einem Ende eines Kettenmoleküls gebildet ist, und eine oder mehr Harnstoffbindungen in der Mitte des Kettenmoleküls, wobei das Linsensubstrat aus einem Material hergestellt ist, das eine Urethanbindung, eine Thiourethanbindung, eine Episulfidbindung oder eine Etherbindung enthält.

2. Verfahren zur Herstellung einer Kunststofflinse nach Anspruch 1, wobei der Schritt des Bereitstellens einer Beschichtungslösung das Mischen der Beschichtungslösung mit feinen anorganischen Partikeln enthält.

3. Verfahren zur Herstellung einer Kunststofflinse nach Anspruch 1 oder Anspruch 2, wobei das Linsensubstrat ein Schwefel-Polymer enthält.

## Revendications

1. Procédé de fabrication d'une lentille en plastique, incluant les étapes consistant à préparer une solution de revêtement, à appliquer la solution de revêtement sur un substrat de lentille pour former un film de revêtement, et à durcir le film de revêtement pour former une couche de revêtement sur le substrat de lentille, **caractérisé en ce que** la solution de revêtement préparée dans l'étape de préparation de solution de revêtement inclut un agent de couplage silane et un composé de silane fonctionnel qui inclut du silicium avec un groupe fonctionnel hydrolysable formé à une extrémité d'une molécule de la chaîne et une ou plusieurs liaisons urée dans le milieu de la molécule de la chaîne, dans lequel le substrat de lentille est préparé à partir d'un matériau contenant l'une quelconque parmi une liaison uréthane, une liaison thio-uréthane, une liaison épisulfure et une liaison éther.

2. Procédé de fabrication d'une lentille en plastique selon la revendication 1, dans lequel l'étape de préparation de la solution de revêtement inclut le mélange de la solution de revêtement avec des particules fines inorganiques.

3. Procédé de fabrication d'une lentille en plastique selon la revendication 1 ou la revendication 2, dans lequel le substrat de lentille contient un polymère soufré.
